Europäisches Patentamt

European Patent Office

Office européen des brevets

(11) Publication number: **0 310 352**
A2

# (12) EUROPEAN PATENT APPLICATION

(21) Application number: **88308981.5**

(22) Date of filing: **28.09.88**

(51) Int. Cl.⁴: **B 29 C 43/20**
B 29 C 65/48
//B29L9:00

(30) Priority: **29.09.87 BG 81313/87**

(43) Date of publication of application:
**05.04.89 Bulletin 89/14**

(84) Designated Contracting States:
**CH DE ES FR GB IT LI NL**

(71) Applicant: **SU "KLIMENT OHRIDSKI"**
**Boul. Ruski**
**Sofia (BG)**

(72) Inventor: **Avramova, Nadka Vassileva**
**Komplex Mladost-4 Block 444-A**
**Sofia (BG)**

**Fakirov, Stoyko Hristov**
**Komplex Hypodruma Block 108-E**
**Sofia (BG)**

(74) Representative: **Silverman, Warren et al**
**HASELTINE LAKE & CO. Hazlitt House 28 Southampton**
**Buildings Chancery Lane**
**London WC2A 1AT (GB)**

(54) Method for processing of liquid crystal polymers.

(57) Liquid crystal polymer foils with a high degree of orientation are subjected to parallel or cross-ply lamination by heating in a vacuum or in an inert medium to an elevated temperature below the melting point of the polymer to produce a thicker liquid crystal polymer article preserving the orientation and associated mechanical properties of the foils.

EP 0 310 352 A2

**Description**

# METHOD FOR THE PROCESSING OF LIQUID CRYSTAL POLYMERS

This invention relates to a method for the processing of liquid crystal polymers which preserves the orientation and hence the associated mechanical properties of the polymers and can find application in the polymer processing industry.

It is known that some polymers containing long and rigid molecules can form a liquid crystal phase. Liquid crystal melts are orientated during injection-moulding and the resulting molecular orientation in the molten state is frozen after cooling. This orientation reinforces the material, increasing the modulus of elasticity. (See Ultra-High Modulus Polymers, A. Ciferri and I.M. Ward, Eds., Appl. Sci, Publ., London, 1979).

The molecular orientation of liquid crystal polymers depends strongly on the thickness of the article, the thinner the article, the higher the degree of orientation of the polymer molecules. This high degree of orientation provides for good mechanical properties such as high modulus of elasticity and tensile strength. However, the modulus of elasticity drops abruptly with the rise in thickness of the article. Thus a two-fold increase in thickness leads to a multiple decrease in the modulus of elasticity since the two parameters have an exponential dependence. (See W.J. Jackson, Jr., and H.F. Kuhfuss, J. Polym. Sci., Polym. Chem. Ed., $\underline{14}$, 2043 (1986)). Briefly, the rise in thickness of the liquid crystal article leads to a loss of the unique mechanical properties of liquid crystal polymers.

An object of the invention is to provide a method for the processing of liquid crystal polymers by which method, the mechanical properties of the polymer are preserved regardless of the thickness of the processed article.

According to the present invention there is provided a method for the production of liquid crystal polymer bodies wherein liquid crystal polymer foils with a high degree of orientation are subjected to parallel or cross-ply lamination by heating in a vacuum or in an inert medium to an elevated temperature below the melting point of the polymer.

The method of this invention is applicable to polymers capable of undergoing exchange trans-reactions in the solid state, i.e. chemical repairs to breaks in the polymer chain since the occurance of physical repair (based on diffusion) is unlikely for such rigid liquid crystal molecules due to their low mobility. As a result of this treatment of the foils, an article of the desired thickness can be obtained, preserving a high degree of orientation in the entire volume and hence excellent mechanical properties.

Bonding can be realized also by the application of suitable adhesives or other bonding chemicals.

The method of the invention preserves the high mechanical parameters of the thin foils with the high orientation of the liquid crystal molecules. The energy consumption of this method is relatively low since heating is carried out below the melting point of the polymer in the case of lamination. In the case where adhesive compositions are applied, the consumption does not differ from presently used methods. The method can be carried out on the existing equipment for lamination and its duration meets the requirements for industrial applications,

The following example illustrates this invention.

## EXAMPLE

A foil, 200 microns thick, is prepared from a liquid crystal copolymer of polyethyleneterephthalate with 60 mole-%-p-hydroxybenzoic acid (Eastman Kodak Co., USA) by extrusion through a flat extension nozzle and immediate cooling down to 0°C (ice-water) in order to obtain a frozen liquid crystal structure. A laminate, 1 mm thick, is prepared from these foils by heating to 170-190°C under pressure of about 3 Mpa under a vacuum, with a preliminary "rinsing" with nitrogen being carried out so that no air is present in the residual atmosphere. Lamination is conducted for 10 hours. The laminate thus obtained had a high tensile modulus of 68,000 kg/cm$^2$.

**Claims**

1. A method for the production of liquid crystal polymer bodies wherein liquid crystal polymer foils with a high degree of orientation are subjected to parallel or cross-ply lamination by heating in a vacuum or in an inert medium to an elevated temperature below the melting point of the polymer.

2. A method as claimed in Claim 1 wherein the liquid crystal foils are from 15 to 200 microns thick.

3. A method as claimed in any preceding claim, wherein lamination takes place under a pressure of 0.05 to 5 Mpa.

4. A method as claimed in Claim 3, wherein lamination takes from 3 to 10 hours.

5. A method as claimed in Claim 1 or 2, wherein the lamination is assisted by use of a chemical bonding agent.